Europäisches Patentamt

European Patent Office

Office européen des brevets

(11) Veröffentlichungsnummer: **0 300 185 B1**

(12) **EUROPÄISCHE PATENTSCHRIFT**

(45) Veröffentlichungstag der Patentschrift: **19.02.92**

(21) Anmeldenummer: **88109237.3**

(22) Anmeldetag: **10.06.88**

(51) Int. Cl.⁵: **A61G 5/04**

---

(54) **Rollstuhl.**

---

(30) Priorität: **22.07.87 DE 3724161**

(43) Veröffentlichungstag der Anmeldung:
**25.01.89 Patentblatt 89/04**

(45) Bekanntmachung des Hinweises auf die
Patenterteilung:
**19.02.92 Patentblatt 92/08**

(84) Benannte Vertragsstaaten:
**BE FR GB NL SE**

(56) Entgegenhaltungen:
**US-A- 4 361 788**

**PATENT ABSTRACTS OF JAPAN, Band 8, Nr. 208 (P-302)[1645], 21. September 1984; & JP-A-59 91 511 (SEKOH GIKEN K.K.) 26-05-1984**

**BIOMEDIZINISCHE TECHNIK, Band 29, Nr. 5, Mai 1984, Seiten 95-103, Berlin, DE; R.-D. WEEGE: "Antriebstechnik bei Elektro-Rollstühlen-Stand und Perspektiven"**

(73) Patentinhaber: **MEYRA WILHELM MEYER GMBH & CO. KG**
**Meyra-Ring 2**
**W-4925 Kalletal-Kalldorf(DE)**

(72) Erfinder: **Weege, Rolf-Dieter, Dr.**
**Knickberg 3**
**W-4925 Kalletal(DE)**

(74) Vertreter: **Leine, Sigurd, Dipl.-Ing. et al LEINE & KÖNIG Patentanwälte Burckhardt-strasse 1**
**W-3000 Hannover 1(DE)**

---

EP 0 300 185 B1

**Beschreibung**

Die Erfindung betrifft einen Rollstuhl der im Oberbegriff des Anspruchs 1 genannten Art.

Durch den Aufsatz "Antriebstechnik bei Elektro-Rollstühlen" von Rolf-D.Weege in der Zeitschrift "Biomedizinische Technik", Band 29, Heft 5, Mai 1984, Seite 95-103, ist ein Rollstuhl der betreffenden Art bekannt, bei dem zwei elektrisch angetriebene Antriebsräder vor zwei nachlaufend angeordneten Lenkrädern angeordnet sind, die durch eine Spurstange verbunden sind, die mit ihren Enden an Lenkarmen angreift, die sich jeweils an den drehbar gelagerten Lenkachsen der Lenkräder befinden. An einer der Lenkachsen befindet sich ein Lenkhebel zur Einstellung des Einschlagwinkels der Lenkräder.

Eine derartige mechanische Zwangslenkung hat mehrere Nachteile. Durch die mechanische Verbindung der Lenkräder durch ein Lenkgestänge ist der Einschlagwinkel und damit der Kurvenradius zu kleineren Werten hin begrenzt. Außerdem ist die mechanische Verbindung der Lenkräder durch das Lenkgestänge nicht in der Lage, exakt den Lenkgesetzen zu genügen. Dies führt insbesondere dann, wenn die Haftung zwischen den Lenkrädern und dem Boden groß ist, zu einer axialen Verspannung der Räder und infolge davon zu einem seitlichen Rutschen wenigstens eines Lenkrades und damit zu einem erhöhten Reifenverschleiß und zu einer erhöhten Antriebsleistung. Durch den erforderlichen Nachlauf der Lenkräder ergeben sich außerdem größere Lenkkräfte.

Durch PATENT ABSTRACTS OF JAPAN, Band 8, Nr. 208 (P-302) [1645] 21.09.1984, ist ein motorisch angetriebener Rollstuhl bekannt, der vier im wesentlichen auf den Ecken eines Quadrats angeordnete Räder aufweist, die mittels eines Betätigungshebels um einen für alle Räder gleichen Winkel verstellbar sind, so daß sich der Rollstuhl in alle Richtungen bewegen kann, ohne seine Drehlage zu verändern. Eine Kurvenfahrt ist daher mit diesem Rollstuhl nicht möglich.

Der Erfindung liegt die Aufgabe zugrunde, einen Rollstuhl der betreffenden Art zu schaffen, bei dem die Nachteile des bekannten Rollstuhls vermieden sind, bei dem also die Lenkräder größere Einschlagwinkel ermöglichen, seitlich nicht klemmen können, und bei denen daher ein erhöhter Energieverbrauch und Reifenverschleiß vermieden ist.

Die der Erfindung zugrundeliegende Aufgabe wird durch die im Kennzeichen des Anspruchs 1 angegebene Lehre gelöst.

Diese Lehre der Erfindung beruht auf dem Grundgedanken, von einer mechanischen Verbindung der Lenkräder durch ein Lenkgestänge ganz abzugehen und stattdessen jedem Lenkrad einen eigenen Lenkmotor zuzuordnen. Dadurch ergibt sich zunächst der große Vorteil, daß der Einschlagwinkel bis zu 360˚ betragen kann. Die Lenkräder sind also in alle Richtungen beliebig einschlagbar. Durch die Verwendung eines elektrischen Antriebes für die Einstellung der Einschlagwinkel der Lenkräder eröffnet sich die Möglichkeit einer solchen elektrischen Speisung der Lenkmotoren, daß die Einschlagwinkel der Lenkräder immer genau den Lenkgesetzen genügen, und dadurch wird ein seitliches Klemmen der Lenkräder und ein erhöhter Reifenverschleiß derselben vermieden. Die Lenkgesetze bedeuten, daß die Lenkräder so eingeschlagen werden, daß ihre Achsen genau auf Radien der gefahrenen Kurve liegen. Das kurveninnere Lenkrad hat also einen größeren Einschlagwinkel als das kurvenäußere Lenkrad, ihre Einschlagwinkel sind also im wesentlichen umgekehrt proportional zum Kurvenradius.

Das von Hand zu betätigende Lenkglied kann ein Lenkrad oder ein Lenkhebel sein, der als mechanischelektrischer Lenkwinkelgeber ausgebildet ist, also in Abhängigkeit von der Winkelstellung des Lenkrades oder Lenkhebels ein elektrisches Lenksignal abgibt, das in eine elektrische Einrichtung eingespeist ist, die unter Berücksichtigung der Lenkgesetze zwei zur Steuerung der beiden Lenkmotoren zur Einstellung der Einschlagwinkel der Lenkräder verwendbare Stellsignale erzeugt, die im wesentlichen umgekehrt proportional zu dem Radius der eingestellten Kurve sind.

Der mechanisch-elektrische Lenkwinkelgeber kann in beliebiger Weise ausgeführt sein. Es kann sich dabei um ein einfaches Potentiometer, um einen Drehfeldgeber, einen Winkelkodierer oder dergleichen handeln. Auch ist es möglich, als Lenkwinkelgeber den Fahrhebel zu verwenden, mit dem die absolute und relative Geschwindigkeit von zwei jeweils mit Antriebsmotoren ausgestatteten Antriebsrädern in bezug zueinander unmittelbar steuerbar ist. Das Lenksignal läßt sich aber auch aufgrund des Unterschiedes zwischen den beiden Geschwindigkeiten der Antriebsräder bilden. Auf diesem Grundgedanken basiert die Weiterbildung gemäß Anspruch 2 der erfindungsgemäßen Lehre, bei der zwei Antriebsräder vorgesehen sind, von deren Geschwindigkeiten die Stellsignale für die Lenkräder in der elektrischen Einrichtung unter Berücksichtigung der im Anspruch 2 angegebenen Zusammenhänge abgeleitet sind. Bei der elektrischen Einrichtung zur Bildung der Stellsignale kann es sich um eine Analogeinrichtung handeln. Zweckmäßig ist jedoch die Verwendung einer digitalen, elektrischen Einrichtung, z.B. eines einfachen Rechners, wobei die einzelnen elektrischen Größen durch Analog/Digitalwandler gewandelt werden oder in digitaler Form vorliegen müssen, wie das zum allgemeinen Können eines jeden Fachmannes auf diesem Gebiet gehört.

EP 0 300 185 B1

Da die Einschlagwinkel der Lenkräder durch die Lenkmotore in der jeweiligen Einschlaglage festgelegt sind, bedarf es grundsätzlich eines Nachlaufs der Lenkräder nicht, um ihnen eine stabilisierende Tendenz zu geben. Gemäß der Weiterbildung nach Anspruch 3 verlaufen daher die Lenkachsen jeweils durch die Drehachsen der Lenkräder. Es ist sogar möglich, einen Vorlauf zu verwenden, um eine dynamische Stabilisierung zu erhalten, indem gemäß der Weiterbildung nach Anspruch 4 die Lenkachsen jeweils hinter den Drehachsen der Lenkräder liegen. In diesem Falle bedarf es einer zusätzlichen Berücksichtigung der dadurch bedingten Lenkwinkelfehler bei der Bildung der Stellsignale für die Lenkmotoren in der diese Stellsignale bildenden elektrischen Einrichtung. Hierbei handelt es sich jedoch um eine Maßnahme, die jedem Fachmann auf dem Gebiet des Fahrzeugbaus bekannt ist und damit keiner besonderen Erläuterung bedarf.

Anhand der Zeichnung soll die Erfindung näher erläutert werden.

Fig. 1     zeigt ein Ausführungsbeispiel eines Rollstuhls gemäß der Erfindung von hinten,

Fig. 2     ist eine Seitenansicht von Fig. 1,

Fig. 3     dient zur Erläuterung der Funktionsweise der Lenkung des Rollstuhls gemäß den Fig. 1 und 2, und

Fig. 4     zeigt schematisch den elektrischen Teil des Rollstuhls gemäß den Fig. 1-3.

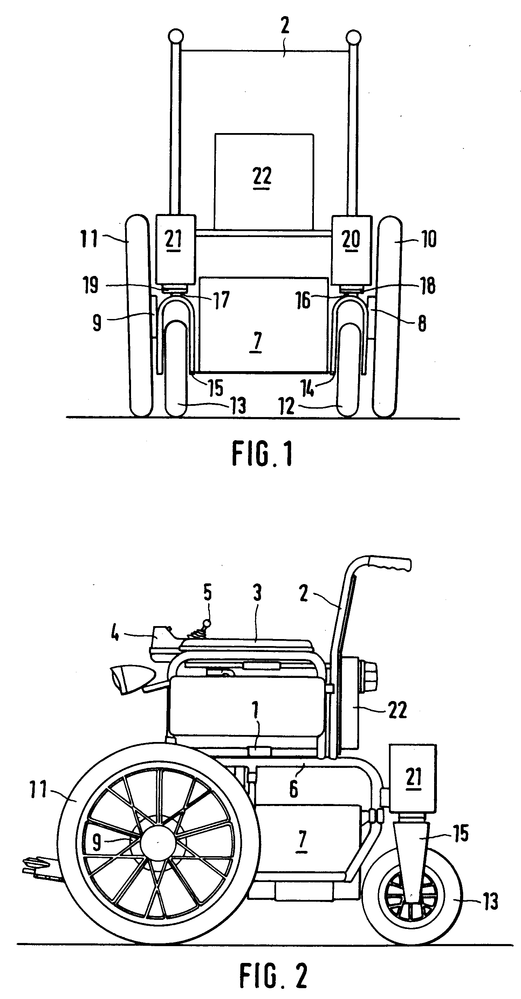

Der in den Fig. 1 und 2 dargestellte Rollstuhl weist einen Sitz 1, eine Rückenlehne 2 und Armlehnen 3 auf, von denen eine einen Fahrschaltkasten 4 mit einem Fahrhebel bzw. Lenkglied 5 aufweist. An einem Fahrgestell 6 befindet sich ein Kasten 7 mit einer Batterie. In Fahrtrichtung vorn sind an dem Fahrgestell 6 zwei Antriebsmotore 8 und 9 mit zugehörigen Antriebsrädern 10 und 11 befestigt. In Fahrtrichtung hinten sind zwei Lenkräder 12 und 13 vorgesehen, die mittels Gabeln 14 und 15 und Drehachsen 16 und 17 in Drehlagern 18 und 19 gelagert sind. Die Lenkachsen oder Drehachsen 16 und 17 befinden sich genau über den Drehachsen der Lenkräder 14 und 15 und sind jeweils mit Lenkmotoren 20 und 21 zur Einstellung der Einschlaglage der Lenkräder 12 und 13 verbunden.

Die Spurweite der Lenkräder 12 und 13 ist mit $t_h$ bezeichnet, während die Spurweite der Antriebsräder 10 und 11 mit $t_v$ bezeichnet ist (Fig. 1). Der Radstand zwischen den Antriebsrädern 10 und 11 einerseits und den Lenkrädern 12 und 13 andererseits ist mit 1 bezeichnet (Fig. 2). Die elektrische Einrichtung zur Steuerung der Antriebsmotore 8 und 9 und der Lenkmotore 20 und 21 befindet sich in einem Kasten 22 auf der Rückseite der Lehne 2.

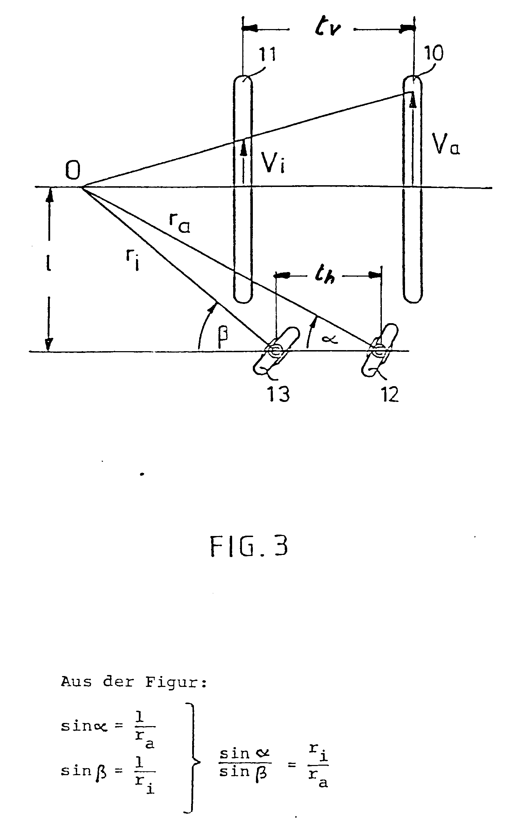

Fig. 3 verdeutlicht die Zusammenhänge bei Kurvenfahrt. Die beiden Antriebsräder 10 und 11 bewegen sich um einen Kurvenmittelpunkt O, wobei durch Vektoren die Kurvengeschwindigkeit $v_i$ des inneren Antriebsrades 11 und $v_a$ des kurvenäußeren Antriebsrades 10 angedeutet sind. Die Lenkräder 12 und 13 sind mit ihren Achsen ebenfalls auf den Kurvenmittelpunkt O ausgerichtet und haben daher unterschiedlicht Einschlagwinkel $\alpha$ und $\beta$.

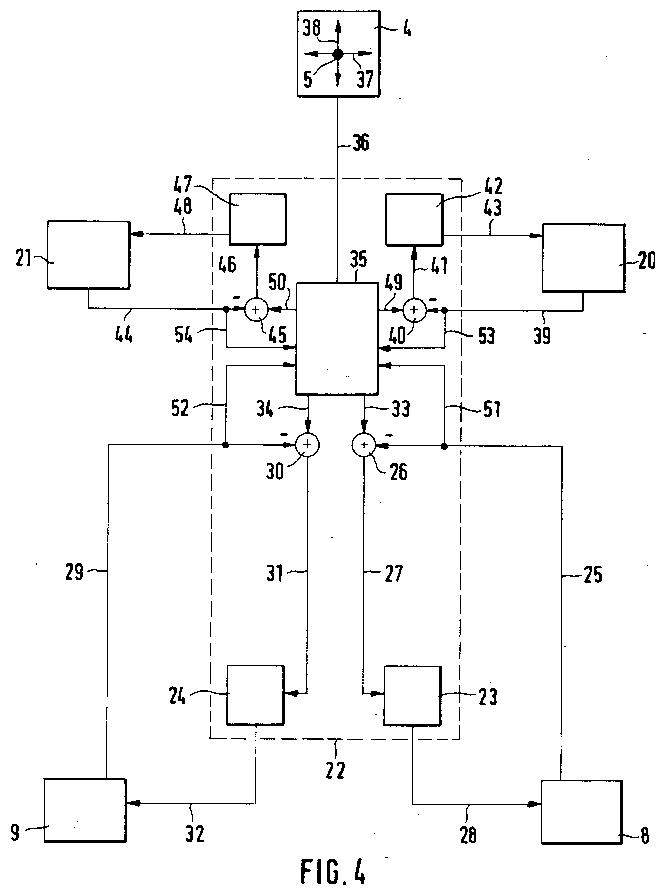

Fig. 4 zeigt als Blockschaltbild schematisch den elektrischen Teil des Rollstuhls gemäß den Fig. 1 und 2. Die Antriebsmotoren 8 und 9 werden jeweils durch eine Leistungselektronik 23 und 24 gespeist, mit denen sie in einer Regelschleife liegen. Die Regelschleife für den Antriebsmotor 8 ist durch eine Leitung 25, ein Additionsglied 26, eine Leitung 27, die Leistungselektronik 23 und eine Leitung 28 gebildet. Die Regelschleife für den Antriebsmotor 9 ist durch eine Leitung 29, ein Additionsglied 30, eine Leitung 31, die Leistungselektronik 24 und eine Leitung 32 gebildet. Die Regelschleifen werden über die Additionsglieder 26, 30 beeinflußt, in die Steuersignale über Leitungen 33 und 34 von einer elektrischen Einrichtung 35 gelangen, die ein Antriebs- und Lenksignal über eine Leitung 36 von dem Fahrschaltkasten 4 erhält. Die Bewegbarkeit des Fahrhebels 5 ist durch Doppelpfeile 37 und 38 angedeutet.

Die Lenkmotore 20 und 21 sind ebenfalls in Regelschleifen eingeordnet. Die Regelschleife für den Lenkmotor 20 besteht aus einer Leitung 39, einem Additionsglied 49, einer Leitung 41, einer Leistungselektronik 42 und einer Leitung 43. Die Regelschleife für den Lenkmotor 21 ist aus einer Leitung 44, einem Additionsglied 45, einer Leitung 46, einem Leistungselektronik 47 und einer Leitung 48 gebildet. Über eine Leitung 49 beeinflußt die elektronische Einrichtung 35 das Additionsglied 40 und damit die Regelschleife für den Lenkmotor 20. Über eine Leitung 50 beeinflußt die elektronische Einrichtung 35 das Additionsglied 45 der Regelschleife für den Lenkmotor 21. Außerdem sind Leitungen 51 - 54 vorgesehen, durch die jeweils die Ist-Werte der Antriebsmotore 8 und 9 bzw. Lenkmotore 20 und 21 in die elektrische Einrichtung 35 zurückgeführt sind, wo sie mit den Sollwerten verglichen werden, die durch die Stellung des Fahrhebels 5 bestimmt sind. Als Lenkmotore können auch Schrittmotore oder dergleichen verwendet werden, wobei die Regelschleifen entfallen würden.

Die elektrische Einrichtung 35 verarbeitet die in sie eingespeisten Signale unter Berücksichtigung der Formeln (1) und (2) gemäß Anspruch 2 derart, daß dem Lenkgesetz genügt ist. Das bedeutet, daß bei jeder Steuerlage des Fahrhebels 5 die Geschwindigkeit der Antriebsmotore 8 und 9 und der durch die Lenkmotore 20 und 21 bestimmte Einschlagwinkel bewirken, daß die Drehachsen sowohl der Antriebsräder

3

EP 0 300 185 B1

10 und 11 als auch der Lenkräder 12 und 13 durch einen gemeinsamen Kurvenmittelpunkt laufen, wie das aus Fig. 3 ersichtlich ist.

**Patentansprüche**

1. Rollstuhl mit elektrischem Antriebsmotor, der wenigstens ein Antriebsrad (10, 11) antreibt, mit einem Paar von mittels Lenkmotor (20, 21) zwangsgesteuerten, jeweils um eine im wesentlichen senkrechte Lenkachse (16, 17) einschlagbaren Lenkrädern (12, 13) und mit einem von Hand zu betätigenden Lenkglied (5), wobei das Lenkglied (5) ein mechanisch-elektrischer Lenkwinkelgeber ist, von dem ein von der Winkelstellung des Lenkgliedes (5) abhängiges, elektrisches Lenksignal abgeleitet ist, **dadurch gekennzeichnet,** daß jedem Lenkrad (12, 13) ein eigener Lenkmotor (20, 21) zur unterschiedlichen Einstellung eines Einschlagwinkels ($\alpha$, $\beta$) der Lenkräder um ihre Lenkachse (16, 17) zugeordnet ist, und daß das elektrische Lenksignal in eine elektrische Einrichtung (35) eingespeist ist, die zur Steuerung der beiden Lenkmotoren (20, 21) zur Einstellung der Einschlagwinkel ($\alpha$, $\beta$) der Lenkräder (12, 13) in bezug auf ihre Lenkachse (16, 17) zwei Stellsignale derart erzeugt, daß stets die Bedingung

$$\frac{\sin\alpha}{\sin\beta} = r_i / r_a$$

erfüllt ist mit:

$\alpha$, $\beta$     Einschlagwinkel des Kurvenäußeren bzw. Kurveninneren Lenkrades (12 bzw. 13)
$r_a$     Bahnradius des kurvenäußeren Lenkrades (12)
$r_i$     Bahnradius des kurveninneren Lenkrades (13).

2. Rollstuhl nach Anspruch 1 mit einem Paar von elektrisch angetriebenen Antriebsrädern, die vorzugsweise in Fahrtrichtung vor den Lenkrädern angeordnet sind und jeweils eigene Antriebsmotore aufweisen, **dadurch gekennzeichnet,** daß der Geschwindigkeitsunterschied der Antriebsmotore (8, 9) durch das elektrische Ausgangssignal des Lenkwinkelgebers gesteuert ist, und daß die elektrische Einrichtung (35) solche Stellsignale erzeugt, daß die Einschlagwinkel ($\alpha$, $\beta$) zusätzlich folgenden Bedingungen genügen:

$$\alpha = 90° - \arctan \left( \frac{t_v \frac{i+1}{i-1} + t_h}{2 \cdot 1} \right) \qquad (1)$$

$$\beta = 90° - \arctan \left( \frac{t_v \frac{i+1}{i-1} - t_h}{2 \cdot 1} \right) \qquad (2)$$

worin ist:

$\alpha$     der Einschlagwinkel des kurvenäußeren Lenkrades (12)
$\beta$     der Einschlagwinkel des kurveninneren Lenkrades (13)
$t_h$     die Spurweite der hinteren Lenkräder (12, 13)
$t_v$     die Spurweite der vorderen Antriebsräder (10, 11)

$$i = \frac{v_i}{v_a}$$

$v_i$     die Geschwindigkeit des kurveninneren Antriebsrades (11)
$v_a$     die Geschwindigkeit des kurvenäußeren Antriebsrades (10)

4

l    der Radabstand zwischen den Lenk- und den Antriebsrädern.

**3.** Rollstuhl nach Anspruch 1 oder 2, **dadurch gekennzeichnet,** daß die Lenkachsen (16, 17) jeweils durch die Drehachsen der Lenkräder (12, 13) verlaufen.

**Claims**

**1.** A wheelchair having an electric driving motor which drives at least one driving wheel (10, 11), having a pair of steering wheels (12, 13) positively controlled by means of a steering motor (20, 21) and each able to lock about an essentially vertical steering axle (16, 17), and having a steering member (5) for actuating by hand, the steering member (5) being a mechanical-electrical angle-of-lock transmitter from which an electrical steering signal is derived which is dependent upon the angular position of the steering member (5), **characterized in that** an independent steering motor (20, 21) is associated with each steering wheel (12, 13) for different setting of the angle of lock ($\alpha$, $\beta$) of the steering wheels about their steering axles (16, 17), and that the electrical steering signal is fed into an electrical equipment (35) which for controlling the two steering motors (20, 21) for setting the angles of lock ($\alpha$, $\beta$) of the steering wheels (12, 13) with respect to their steering axles (16, 17) generates two positioning signals such that the condition

$$\frac{\sin \alpha}{\sin \beta} = r_i / r_a$$

is fulfilled where:

$\alpha$, $\beta$    = angle of lock of the steering wheel (12 resp. 13) on the outside and inside of the curve respectively;
$r_a$    = radius of the path of the steering wheel (12) on the outside of the curve;
$r_i$    = radius of the path of the steering wheel (13) on the inside of the curve.

**2.** A wheelchair as in Claim 1, having a pair of electrically driven driving wheels which are preferably arranged in front of the steering wheels in the direction of travel and each of which exhibits its own driving motor, **characterized in that** the difference in speed between the driving motors (8, 9) is controlled by the electrical output signal from the angle-of-lock transmitter, and that the electrical equipment (35) generates positioning signals such that the angles of lock ($\alpha$, $\beta$) in addition satisfy the following conditions:

$$\alpha = 90° - \arctan \left( \frac{t_v \frac{i+1}{i-1} + t_h}{2 \cdot 1} \right) \quad (1)$$

$$\beta = 90° - \arctan \left( \frac{t_v \frac{i+1}{i-1} - t_h}{2 \cdot 1} \right) \quad (2)$$

wherein:

$\alpha$    = the angle of lock of the steering wheel (12) on the outside of the curve;
$\beta$    = the angle of lock of the steering wheel (13) on the inside of the curve;
$t_h$    = the width of track of the rear steering wheels (12, 13);
$t_v$    = the width of track of the front driving wheels (10, 11);

$$i = \frac{v_i}{v_a}$$

$v_i$ = the speed of the driving wheel (11) on the inside of the curve;
$v_a$ = the speed of the driving wheel (10) on the outside of the curve;
l = the wheelbase between the steering and driving wheels.

3. A wheelchair as in Claim 1 or 2, **characterized in that** the steering axles (16, 17) respectively run through the axes of rotation of the steering wheels (12, 13).

**Revendications**

1. Fauteuil roulant avec moteur électrique d'entraînement qui entraîne au moins une roue motrice (10, 11), avec une paire de roues directrices (12, 13) entraînées à force au moyen d'un moteur d'orientation (20, 21), pouvant être braquées autour d'un axe d'orientation (16, 17) sensiblement vertical, et avec un organe d'orientation (5) devant être actionné manuellement, l'organe d'orientation (5) étant un transmetteur d'angle d'orientation mécanique-électrique dont est dérivé un signal électrique d'orientation dépendant de la position angulaire de l'organe d'orientation (5),
caractérisé en ce qu'à chaque roue directrice (12, 13) est adjoint un moteur d'orientation (20, 21) spécifique pour un réglage différent d'angle de braquage ($\alpha$, $\beta$) des roues directrices autour de leurs axes d'orientation (16, 17) et que le signal électrique d'orientation est envoyé à un dispositif électrique (35) qui génère deux signaux de réglage pour commander les deux moteurs d'orientation (20, 21) pour le réglage de l'angle de braquage ($\alpha$, $\beta$) des roues directrices (12, 13) par rapport à leur axe d'orientation (16, 17) de telle manière que la relation

$$\frac{\sin \alpha}{\sin \beta} = \frac{r_i}{r_a}$$

soit toujours satisfaite, avec

$\alpha$, $\beta$    angle de braquage de la roue extérieure à la courbe, respectivement intérieure à la courbe (12 respectivement 13),
$r_a$    rayon de trajectoire de la roue directrice extérieure à la courbe (12),
$r_i$    rayon de trajectoire de la roue directrice intérieure à la courbe (13).

2. Fauteuil roulant selon la revendication 1, avec une paire de roues motrices entraînées électriquement qui sont de préférence disposées devant les roues directrices en direction de déplacement et présentent respectivement des moteurs d'entraînement spécifiques,
caractérisé en ce que la différence de vitesses des moteurs d'entraînement (8, 9) est commandée par le signal électrique de sortie du transmetteur d'angle d'orientation, et que le dispositif électrique (35) génère des signaux de commande tels que les angles de braquage ($\alpha$, $\beta$) satisfont additionnellement les relations suivantes :

$$\alpha = 90° - \arctan \left\{ \frac{t_v \frac{i+1}{i-1} + t_h}{2 \cdot 1} \right\} \quad (1)$$

$$\beta = 90° - \arctan \left\{ \frac{t_v \frac{i+1}{i-1} - t_h}{2 \cdot 1} \right\} \quad (2)$$

dans lesquelles

$\alpha$    est l'angle de braquage de la roue directrice extérieure à la courbe (12)
$\beta$    est l'angle de braquage de la roue directrice intérieure à la courbe (13),

th      est la voie entre les roues postérieures directrices (12, 13)

tv      est la voie entre les roues antérieures motrices (10, 11)

i       $= \frac{v i}{v a}$

$v_i$     est la vitesse de la roue motrice intérieure à la courbe (11),

$v_a$     est la vitesse de la roue motrice extérieure à la courbe (10),

l       est l'empattement entre les roues directrices et motrices.

3. Fauteuil roulant selon la revendication 1 ou 2, caractérisé en ce que les axes d'orientation (16, 17) passent respectivement par les axes de rotation des roues directrices (12, 13).

7

FIG.1

FIG. 2

# FIG. 3

Aus der Figur:

$$\left. \begin{array}{l} \sin\alpha = \dfrac{1}{r_a} \\[2mm] \sin\beta = \dfrac{1}{r_i} \end{array} \right\} \quad \dfrac{\sin\alpha}{\sin\beta} = \dfrac{r_i}{r_a}$$

FIG. 4